(19) **Europäisches Patentamt**

**European Patent Office**

**Office européen des brevets**

(11) Veröffentlichungsnummer: **0 327 695 B1**

(12) **EUROPÄISCHE PATENTSCHRIFT**

(45) Veröffentlichungstag der Patentschrift: **01.07.92**

(51) Int. Cl.⁵: **C22B 11/08**

(21) Anmeldenummer: **88120042.2**

(22) Anmeldetag: **01.12.88**

(54) **Verfahren zur Laugung von Gold und Silber aus Erzen oder Erzkonzentraten sowie aus Edelmetallabfällen oder Edelmetallschrott durch Verwendung cyanidhaltiger Laugenlösungen.**

(30) Priorität: **22.01.88 DE 3801741**

(43) Veröffentlichungstag der Anmeldung:
**16.08.89 Patentblatt 89/33**

(45) Bekanntmachung des Hinweises auf die Patenterteilung:
**01.07.92 Patentblatt 92/27**

(84) Benannte Vertragsstaaten:
**ES FR GB**

(56) Entgegenhaltungen:
**DE-C- 3 637 082**
**US-A- 3 826 723**

**HYDROMETALLURGY Band 16, Nr. 3, Seiten 395-400, 1986, Amsterdam, NL; R.M. GARCIA: "The Recovery of Silver from Photographic Film: A Study of the Leaching Reaction with Cyanide Solution for Industrial Use"**

(73) Patentinhaber: **Degussa Aktiengesellschaft**
**Weissfrauenstrasse 9**
**W-6000 Frankfurt am Main 1(DE)**

(72) Erfinder: **Bahr, Albert, Prof. Dr.-Ing.**
**Daniel-Flach-Strasse 3**
**W-3392 Clausthal-Zellerfeld(DE)**
Erfinder: **Priesemann, Thomas, Dipl.-Ing.**
**Bergstrasse 29**
**W-3392 Clausthal-Zellerfeld(DE)**

EP 0 327 695 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Laugung von Gold und/oder Silber aus Erzen oder Erzkonzentraten sowie aus Edelmetallabfällen oder Edelmetallschrott unter Verwendung cyanidhaltiger Laugungslösungen mit einem pH-Wert von 7 bis 13 durch Zusatz einer wässerigen $H_2O_2$-Lösung

Bei dem bisher üblichen industriellen Verfahren zur Laugung von Edelmetallen aus Erzen oder Erzkonzentraten wird das Erz feingemahlen in Wasser aufgeschlämmt, durch den Zusatz von Kalk bzw. Kalkmilch der pH-Wert der Erztrübe in den basischen pH-Bereich angehoben und anschließend das als Komplexbildner wirksame Cyanid in der Regel als NaCN in Form einer wässerigen ca. 5 bis 20%igen Lösung zugesetzt. Die Erztrübe wird anschließend unter Einleitung von Luft über die Dauer von 24 bis 48 Stunden in Rühr- oder Pachucatanks über die Dauer von 24 bis 48 Stunden bewegt.

Da Cyanid im sauren pH-Bereich unter Bildung der hochgiftigen Blausäure hydrolysiert, muß der pH-Wert der Erztrübe in den basischen Bereich angehoben und in diesem Bereich gehalten werden, wobei üblicherweise bei einem pH-Wert von 10 bis 11 gearbeitet wird. Dieser pH-Wert wird üblicherweise durch Zugabe von Kalk und Kalkmilch im Verhältnis von 80:20 eingestellt.

Die Cyanid-Konzentration der Laugungstrübe beträgt je nach Erzzusammensetzung 0,025 bis 0,25Gew.% NaCN. Das Cyanid wird dabei als wässerige Lösung von 2 bis 20% in den ersten der bis zu zehn kaskadenartig nacheinander von der Trübe durchströmten Laugungstanks zu dosieren.

Bei dem Eintrag der Luft in die Laugungstrübe wird eine Konzentration an gelöstem Sauerstoff in der Trübe möglichst auf dem physikalisch bedingten maximalen Wert von ca. 8 bis 9 ppm angestrebt, da bei der praktisch üblichen Cyanid-Konzentration von 0,3 bis 3 kg/t Erz die Diffusion des gelösten Sauerstoffes in der Trübe die Laugungsgeschwindigkeit bestimmt.

Die Laugung von Gold und Silber in Cyanid-Lösungen unter Verwendung von NaCN läuft nach folgender Gleichung ab.

$$2 \text{ Au} + 4 \text{ NaCN} + 1/2 \text{ O}_2 + \text{H}_2\text{O} \longrightarrow 2 \text{ Na[Au(CN)}_2] + 2 \text{ NaOH}.$$

Die vorgenannte Reaktion erfolgt dabei in zwei Stufen.

$$2 \text{ Au} + 4 \text{ NaCN} + \text{O}_2 + 2 \text{ H}_2\text{O} \longrightarrow 2 \text{ Na[Au(CN)}_2] + \text{H}_2\text{O}_2 + 2 \text{ NaOH}$$
$$2 \text{ Au} + 4 \text{ NaCN} + \text{H}_2\text{O}_2 \longrightarrow 2 \text{ Na[Au(CN)}_2] + 2 \text{ NaOH}.$$

Das im ersten Reaktionsschritt gebildete Peroxid erhöht durch seine Zersetzung zu Sauerstoff und Wasser die Konzentration des gelösten Sauerstoffes in der Trübe. Statt des vorstehend und auch nachfolgend genannten NaCN kann auch ohne weiteres KCN verwendet werden.

Es ist bekannt, Wasserstoffperoxid bei der Gewinnung von Edelmetallen durch Verwendung Cyanid-haltiger Laugungslösungen zu verwenden. Eine Verwendungsart besteht darin, daß das Wasserstoffperoxid nicht zur Oxidation der Edelmetalle benutzt wird, sondern zur Entgiftung der Laugungstrüben vor deren Weiterleitung in die Vorflut. Das in den Trüben enthaltene Cyanid wird dabei durch die Zugabe von Wasserstoffperoxid zu ungiftigem Cyanat und Ammoniak abgebaut. Dabei erfolgt der Abbau des Cyanids nur im pH-Bereich von 9,5 bis 11,5 relativ schnell. Dieser pH-Bereich stimmt überein mit dem bevorzugten pH-Bereich bei dem bekannten Laugungsverfahren der eingangs genannten Art, bei welchem der Sauerstoff in die Laugungstrübe durch Lufteinblasen eingebracht wird.

Ein weiteres bekanntes Verfahren (US-PS 3 826 723) sieht die Zugabe einer wässerigen $H_2O_2$-Lösung als Oxidationsmittel für die Edelmetallaugung mittels Cyanid-haltiger Laugungslösungen vor, welches jedoch wegen des außerordentlich hohen Cyanidverbrauches unwirtschaftlich ist und sich nicht in die Praxis einführen ließ. Bei diesem bekannten Verfahren soll zur Erzielung einer kürzeren Laugungszeit die Cyanidkonzentration 1 bis 600 g NaCN/l Lauge und gemäß einem Ausführungsbeispiel 60 g NaCN/l Lauge betragen und der Lauge pro Liter 5 ml stabilisiertes 50%iges $H_2O_2$ zugesetzt werden. Außerdem ist es bei dem bekannten Verfahren erforderlich, 1 g Ligninsulfonat pro Liter Laugenlösung zuzugeben.

Das bei dem vorgenannten Verfahren eingestellte molare Verhältnis von NaCN/$H_2O_2$ deutet darauf hin, daß wie bei der zuvor beschriebenen Entgiftung der Laugungstrüben bei einem pH-Wert zwischen 9,5 und 11,5 gearbeitet wird. Durch den starken Abbau des NaCN bei seiner Reaktion mit dem zugesetzten $H_2O_2$ steht nur das im Überschuß zugegebene NaCN zur Komplexierung der Edelmetalle zur Verfügung.

In der nicht vorveröffentlichten DE-PS 36 37 082 ist ein Verfahren beschrieben, bei dem zur Laugung von Gold und/oder Silber aus Erz oder Erzkonzentraten unter Verwendung einer wäßrigen cynadischen Laugenlösung mit einem pH-Wert von 8 bis 13 unter Zusatz einer wäßrigen $H_2O_2$-Lösung die Zugabe der genannten $H_2O_2$-Lösung über die Konzentration des in der Laugungslösung gelösten Sauerstoffes geregelt wird und in der Laugungslösung ein Sauerstoffgehalt von 2 bis 20 mg/l eingestellt wird. Hierdurch soll der Laugungsvorgang wirtschaftlicher durchgeführt werden, insbesondere durch eine Verminderung des Verbrauches an $H_2O_2$, ohne daß gegenüber der zuvor bekannten Laugungstechnik mit Luftbegasung ein höherer Natriumcyanid-Verbrauch verursacht wird.

Der Erfindung liegt die Aufgabe zugrunde, das einleitend genannte Verfahren so zu verbessern, daß bei der herkömmlichen Konzentration des NaCN in der Laugungstrübe und geringem Verbrauch an $H_2O_2$ eine erhebliche Verkürzung der Laugungszeit gegenüber dem bekannten Verfahren erreicht und hierdurch auch der Aufwand für die Durchführung des Verfahrens beachtlich vermindert wird.

Die Lösung der vorstehenden Aufgabe erfolgt durch ein Verfahren zur Laugung von Gold und/oder Silber aus Erzen oder Erzkonzentraten sowie aus Edelmetallabfällen oder Edelmetallschrott in einer Laugungstrübe aus dem genannten zu laugenden Material und einer cyanidhaltigen Laugungslösung mit einem pH-Wert von 7 bis 13 unter Zusatz einer wäßrigen Wasserstoffperoxidlösung, das dadurch gekennzeichnet ist, daß

a) die für den Laugungsvorgang benötigte Gesamtmenge der Wasserstoffperoxidlösung der Laugungstrübe zu Beginn der Laugung zugesetzt wird,

b) das Wasserstoffperoxid im 0,6- bis 2,5 fachen molaren Verhältnis zur Cyanid-Konzentration der Laugungstrübe zugegeben wird und

c) der pH-Wert der Laugungstrübe zwischen 7 und 10 oder 11 und 13 eingestellt und gehalten wird.

Die Erfindung geht von der Erkenntnis aus, daß im alkalischen pH-Wertbereich der Laugungstrübe unterhalb von 10 bzw. oberhalb von 11 bis zu pH 13 die Reaktion des NaCN mit $H_2O_2$ stark gehemmt, d.h. verlangsamt abläuft, so daß es als Komplexbildner weitergehend erhalten bleibt und gleichzeitig durch die Zersetzung des $H_2O_2$ die angestrebte Konzentration an gelöstem Sauerstoff in der Trübe erreicht wird, die für die Reaktion des NaCN mit dem Edelmetall gemäß den einleitenden Ausführungen erforderlich ist. Durch die Zugabe der für den Laugungsvorgang benötigten Gesamtmenge der $H_2O_2$-Lösung zu der Laugungstrübe zu Beginn der Laugung wird über den gesamten Laugungszeitraum ein optimales Verhältnis zwischen der $H_2O_2$-Konzentration, der zu laugenden Edelmetallmenge und der NaCN-Konzentration erreicht. Zum Beginn des Laugungsvorganges werden bei höchsten Gehalten der Laugungstrübe an zu laugenden Edelmetallen und an Cyan auch die höchsten Angebote an $H_2O_2$ gewährleistet. Mit zunehmender Bindung des Edelmetalles an CN stellt sich automatisch auch der Gehalt an $H_2O_2$ in der Laugungstrübe auf den verringerten Bedarf ein.

Für die Beschleunigung des Laugungsvorganges ist es wichtig, daß bereits beim Eintrag der $H_2O_2$-Lösung dessen homogene Verteilung in der Laugungstrübe sichergestellt wird, da anderenfalls örtliche molare Verhältnisse von NaCN/$H_2O_2$ in der Laugungstrübe entstehen, welche zu einer beschleunigten Zersetzung des NaCN führen, durch welche entweder der Austrag an Edelmetallen vermindert oder aber die erforderliche Zugabe des NaCN erhöht würde. Aus diesem Grunde ist es zweckmäßig, wenn die Wasserstoffperoxid-Lösung in eine strömende Laugungstrübe über den Querschnitt des Laugungstrübenstroms homogen verteilt kontinuierlich zugegeben wird. Durch die homogene Verteilung der $H_2O_2$-Lösung in einen Laugungstrübenstrom wird zudem vom Augenblick der Zugabe ab eine über den Strömungsquerschnitt gleichmäßige Reaktion erreicht, die wiederum zu einer Verkürzung der Laugungszeit beiträgt.

Besonders günstige Verhältnisse und Laugungszeiten werden erreicht, wenn der pH-Wert der Laugungstrübe zwischen 8 und 9,5 oder 11,5 und 12,3 eingestellt und gehalten wird.

Die $H_2O_2$-Lösung kann der Laugungstrübe sowohl vor als auch nach Zugabe des Cyanids zugegeben werden. Zweckmäßig erfolgt die Zugabe der $H_2O_2$-Lösung vor der Cyanidzugabe zur Laugungstrübe, da hierdurch vor der Cyanidzugabe bereits eine $O_2$-Anreicherung und Verteilung in der Trübe erreicht wird.

Die NaCN-Konzentration beträgt, wie bei den herkömmlichen Verfahren, etwa 0,25 bis 1 g/l der Laugungstrübe. In Versuchsreihen wurde festgestellt, daß bei Zugabe von 0,5 g NaCN sowie 1 g einer 35 %igen $H_2O_2$-Lösung pro Liter Laugungstrübe bei pH 9 aus dieser Trübe nahezu 100 % der Edelmetalle nach ca. 100 Minuten ausgebracht wurden, wobei sich die Edelmetalle problemlos durch Kohleadsorption abtrennen ließen.

Durch das neue Verfahren wird die Zeitspanne für die Laugung der Edelmetalle gegenüber dem herkömmlichen Verfahren auf 1/5 bis auf 1/20 der Werte nach diesem Stand der Technik verringert. Anstelle der bisherigen Laugungszeiten von 24 bis 48 Stunden reichen bei dem neuen Verfahren Zeiten von 2 bis 4 Stunden aus.

Die Menge der zugegebenen $H_2O_2$-Lösung ist nicht durch die in der Laugungstrübe befindliche NaCN-Menge begrenzt. Vielmehr kann die $H_2O_2$-Menge deutlich oberhalb der für eine vollständige Zersetzung des NaCN notwendigen Menge liegen, ohne daß ein unerwünschter Abbau des NaCN in Kauf genommen werden muß. Praktische Erfahrungen haben gezeigt, daß es günstig ist, wenn die $H_2O_2$-Lösung in einer solchen Menge zugegeben wird, daß pro Tonne Erz die Menge des $H_2O_2$ 0,1 bis 2,5 kg beträgt bei üblichen Cyanid-Konzentrationen von 0,1 bis 3 kg NaCN/t Erz.

Eine zweckmäßige Form des Eintrags der $H_2O_2$-Lösung in den Laugungstrübenstrom besteht

darin, daß die $H_2O_2$-Lösung als Querströmung in den Laugungstrübenstrom mit einer 10 bis 50fachen Strömungsgeschwindigkeit des Laugungstrübenstromes eingebracht wird. Eine bevorzugte Ausführungsform ist dadurch gekennzeichnet, daß die Laugungstrübe im Bereich der Zugabe der $H_2O_2$-Lösung mit einer Strömungsgeschwindigkeit von 1 bis 3 m/sec. geführt wird und die Querströmung der $H_2O_2$-Lösung auf eine Strömungsgeschwindigkeit von 10 bis 100 m/sec. eingestellt wird. Die Zuführung der $H_2O_2$-Lösung in den Laugungstrübenstrom wird mit üblichen Zuführungsvorrichtungen, vorzugsweise über Spaltdüsen im Mikrometerbereich, vorgenommen. Durch die zuvor genannten Maßnahmen wird schon nach Bruchteilen von Sekunden die gleichmäßige Verteilung des $H_2O_2$ in den Strom der Laugungstrübe erreicht. Bei Verwendung von Spaltdüsen sollten solche mit Schlitzöffnungen von 5 bis 100 $\mu$m verwendet werden, wenn der Laugungstrübe die $H_2O_2$-Lösung im Bereich eines rohrförmigen Querschnittes mit einem Durchmesser von nicht größer als 10 cm zugegeben wird.

Wenn in den Edelmetallerzen bzw. den Erzkonzentraten hohe Anteile Cyanid-löslichen Eisens oder Kupfers, insbesondere in Form von Sulfiden, vorliegen, so kann aufgrund der katalytischen Wirkung der Cu(II)- bzw. Fe(III)-Ionen eine spontane Zersetzung des $H_2O_2$ in der Laugungstrübe und dadurch bedingt eine schnelle Zersetzung auch des Cyanids erfolgen. Diese Reaktionen laufen im gesamten pH-Bereich von 7 bis 13 ab, auch in dem obengenannten pH-Bereich zwischen 7 und 10 oder 11 und 13.

Die oben aufgezeigten Nachteile lassen sich vermeiden, wenn zur Passivierung bzw. Maskierung der Kupfer- bzw. Eisenmineralien Flotationsreagenzien für sulfidische Erze oder anionische Polymere in einer Menge von 5 bis 1000 g/t Erz, vorzugsweise 25 bis 250 g/t, der Laugungstrübe zugesetzt werden. Vorzugsweise erfolgt die Zugabe der Flotationsreagenzien oder Polymere nach der pH-Wert-Einstellung der Laugungstrübe und vor der Zugabe der $H_2O_2$-Lösung und des Cyanids. Bevorzugt werden als Maskierungs- bzw. Passivierungsmittel Thiocarbonate, Thiophosphate, Thiocarbaminate oder anionische Polymere in der Form von Acrylaten, Stärken, Carboxymethylcellulosen, der Laugungstrübe zugesetzt. Die Maskierungs- bzw. Passivierungsmittel werden im allgemeinen in Form einer 0,1 bis 10 gew.-%igen wäßrigen Lösung der Laugungstrübe zugesetzt.

Die Zugabe der in diesen Ansprüchen beschriebenen Reagenzien soll zweckmäßigerweise ebenfalls über den Querschnitt des Trübenstromes homogen verteilt erfolgen. Dies kann bei Verwendung wäßriger Lösungen mit Hilfe von Spaltdüsen erreicht werden, wie bereits im Zusammenhang mit

der Zuführung der $H_2O_2$-Lösung beschrieben wurde. Die homogene bzw. kurzzeitige Verteilung der Passivierungs- bzw. Maskierungsmittel führt zu einer Verkürzung ihrer Reaktionszeiten mit den Cu- bzw. Fe-Mineralien.

Beispiele:

Bei durchgeführten Versuchen jeweils in einem 2l-Becherglas wurden folgende Ergebnisse erzielt:

A) Laugung nach herkömmlichem Verfahren mit NaCN ohne Zugabe von $H_2O_2$.

Ein Malachit/Azurit-reiches Golderz - es handelt sich um den Laugungsrückstand einer älteren Goldaufbereitungsanlege - enthält ca. 3 ppm Gold und als wichtiges Begleitelement 1,2% Kupfer. Das Erz ist auf einen $d_{80}$-Wert von 200 $\mu$m aufgemahlen.

Das Erz wird bei einer Trübedichte von 500 g Erz/l Lauge unter turbulentem Rühren unter Zugabe von NaCN von 0,02 bis zu 0,2 Gew.-% gelaugt. Die pH-Werte der Laugungstrüben werden zwischen 9 und 12 variiert.

Die erreichte Goldausbeute überschreitet in keinem der durchgeführten Versuche 87%. Das maximale Ausbringen wird jeweils erst nach ca. 20stündiger Laugungsdauer erreicht.

B) Laugung des gleichen Erzes wie in A) angegeben, jedoch unter Zusatz einer $H_2O_2$-Lösung.

Der Erztrübe mit einer Trübedichte von 500 g Erz/l Lauge wird pro Liter Lauge 0,6 ml 35%ige $H_2O_2$-Lösung über Spaltdüsen zudosiert, und zwar vor der Zugabe von NaCN. Diese wird in einer solchen Menge zugesetzt, daß eine NaCN-Konzentration von 0,05 Gew.-% erreicht wird. Bei der beschriebenen Zugabe der $H_2O_2$-Lösung ergibt sich eine $H_2O_2$-Konzentration der Lauge von 0,02 Gew.-%.

Nach dreistündiger Versuchszeit werden bei eingestellten pH-Werten der Laugungstrübe von 8 und 9 pH Ausbringungswerte für Gold von über 97% erreicht. Bei pH-Werten der Laugungstrübe von 12 pH liegen die Ausbringungswerte ebenfalls oberhalb von 90%, nämlich bei 93%. Nur im Bereich zwischen den genannten pH-Werten wird eine Goldausbeute unterhalb von 87% beobachtet.

**Patentansprüche**

1.   Verfahren zur Laugung von Gold und/oder Silber aus Erzen oder Erzkonzentraten sowie aus Edelmetallabfällen oder Edelmetallschrott in einer Laugungstrübe aus dem genannten zu laugenden Material und einer cyanidhaltigen Laugungslösung mit einem pH-Wert von 7 bis 13 unter Zusatz einer wäßrigen Wasserstoffperoxidlösung, dadurch gekennzeichnet, daß

    a) die für den Laugungsvorgang benötigte Gesamtmenge der Wasserstoffperoxidlösung der Laugungstrübe zu Beginn der Laugung zugesetzt wird,

    b) das Wasserstoffperoxid im 0,6- bis 2,5-fachen molaren Verhältnis zur Cyanid-Konzentration der Laugungstrübe zugegeben wird und

    c) der pH-Wert der Laugungstrübe zwischen 7 und 10 oder 11 und 13 eingestellt und gehalten wird.

2. Verfahren nach Anspruch 1, dadurch gekennzeichnet, daß die Wasserstoffperoxidlösung in eine strömende Laugungstrübe über den Querschnitt des Laugungstrübenstroms homogen verteilt kontinuierlich zugegeben wird.

3. Verfahren nach Anspruch 1 oder 2, dadurch gekennzeichnet, daß die Wasserstoffperoxidlösung vor der Cyanidzugabe der Laugungstrübe zugesetzt wird.

4. Verfahren nach einem der vorhergehenden Ansprüche, **dadurch gekennzeichnet**, daß der pH-Wert der Laugungstrübe zwischen 8 und 9,5 oder 11,5 und 12,3 eingestellt und gehalten wird.

5. Verfahren nach einem der vorhergehenden Ansprüche, **dadurch gekennzeichnet**, daß die $H_2O_2$-Lösung in einer solchen Menge zugegeben wird, daß pro Tonne Erz die Menge des $H_2O_2$ 0,1 bis 2,5 kg beträgt bei Cyanid-Konzentrationen von 0,1 bis 3,0 kg NaCN/t Erz.

6. Verfahren nach einem der vorhergehenden Ansprüche, **dadurch gekennzeichnet**, daß die $H_2O_2$-Lösung als Querströmung in den Laugungstrübenstrom mit einer 10 bis 50fachen Strömungsgeschwindigkeit des Laugungstrübenstromes eingebracht wird.

7. Verfahren nach Anspruch 6, **dadurch gekennzeichnet**, daß die Laugungstrübe im Bereich der Zugabe der $H_2O_2$-Lösung mit einer Strömungsgeschwindigkeit von 1 bis 3 m/sec. geführt wird und die Querströmung der $H_2O_2$-Lösung auf eine Strömungsgeschwindigkeit von 10 bis 100 m/sec. eingestellt wird.

8. Verfahren nach einem der Ansprüche 6 oder 7, **dadurch gekennzeichnet**, daß die Zuführung

der $H_2O_2$-Lösung in den Laugungstrübenstrom über Spaltdüsen im Mikrometerbereich vorgenommen wird.

9. Verfahren nach einem der vorhergehenden Ansprüche, dadurch gekennzeichnet, daß bei Verwendung von Erzen oder Erzkonzentraten mit höheren Anteilen an cyanidlöslichem Eisen und/oder Kupfer, insbesondere in Form von Sulfiden, zur Passivierung bzw. Maskierung der Kupfer- bzw. Eisenmineralien Flotationsreagenzien für sulfidische Erze oder anionische Polymere in einer Menge der Reagenzien von 5 bis 1000 g/t Erz, vorzugsweise 25 bis 250 g/t, der Laugungstrübe zugesetzt werden.

10. Verfahren nach Anspruch 9, **dadurch gekennzeichnet**, daß die Zugabe der Flotationsreagenzien oder Polymere nach der pH-Wert- Einstellung der Laugungstrübe und vor der Zugabe der $H_2O_2$-Lösung und des Cyanids erfolgt.

11. Verfahren nach Anspruch 9 oder 10, **dadurch gekennzeichnet**, daß als Maskierungs-bzw. Passivierungsmittel Thiocarbonate, Thiophosphate, Tiocarbaminate oder anionische Polymere in der Form von Acrylaten, Stärken, Carboxymethylcellulosen, der Laugungstrübe zugesetzt werden.

12. Verfahren nach einem der Ansprüche 9 bis 11, **dadurch gekennzeichnet**, daß die Maskierungs- bzw. Passivierungsmittel in Form einer 0,1 bis 10%igen wäßrigen Lösung einem Laugungstrübenstrom über den Querschnitt homogen verteilt zugegeben wird.

## Claims

1. Process for leaching gold and/or silver from ores or ore concentrates and from noble-metal waste or noble-metal scrap in a leaching pulp comprising said material to be leached and a cyanide-containing leaching solution having a pH of from 7 to 13 with addition of aqueous hydrogen peroxide solution, characterized in that

    a) the total amount of hydrogen peroxide solution required for the leaching process is added to the leaching pulp on commencement of leaching,

    b) the hydrogen peroxide is added to the leaching pulp in a molar ratio of 0.6 to 2.5 times the cyanide concentration, and

    c) the pH of the leaching pulp is set to and held at between 7 and 10 or 11 and 13.

2. Process according to Claim 1, characterized in that the hydrogen peroxide solution is added continuously to a flowing leaching pulp distributed homogenously over the cross-section of the leaching pulp stream.

3. Process according to Claim 1 or 2, characterized in that the hydrogen peroxide solution is added to the leaching pulp before addition of cyanide.

4. Process according to one of the preceding claims, characterized in that the pH of the leaching pulp is set to and held at between 8 and 9.5 or 11.5 and 12.3.

5. Process according to one of the preceding claims, characterized in that the $H_2O_2$ solution is added in an amount such that the amount of $H_2O_2$ per tonne of ore is 0.1 to 2.5 kg at cyanide concentrations of from 0.1 to 3.0 kg of NaCN/t of ore.

6. Process according to one of the preceding claims, characterized in that the $H_2O$ solution is introduced into the leaching pulp stream as a crosscurrent at a flow rate of 10 to 50 times that of the leaching pulp stream.

7. Process according to Claim 6, characterized in that the leaching pulp flows at a rate of from 1 to 3 m/sec in the region of addition of the $H_2O_2$ solution, and the $H_2O_2$ solution crosscurrent is set to a flow rate of from 10 to 100 m/sec.

8. Process according to either Claim 6 or 7, characterized in that the $H_2O_2$ solution is supplied to the leaching pulp stream via slot nozzles in the micron region.

9. Process according to one of the preceding claims, characterized in that, in the case where ores or ore concentrates having relatively high contents of cyanide-soluble iron and/or copper, in particular in the form of sulphides, are used, flotation reagents for sulphide ores or anionic polymers are added to the leaching pulp in an amount of from 5 to 1,000 g of reagents per tonne of ore, preferably 25 to 250 g/t, for passivation or masking of the copper or iron minerals.

10. Process according to Claim 9, characterized in that the flotation reagents or polymers are added after adjusting the pH of the leaching pulp and before addition of the $H_2O_2$ solution and of the cyanide.

11. Process according to Claim 9 or 10, characterized in that the masking or passivation agents added to the leaching pulp are thiocarbonates, thiophosphates, thiocarbamates, or anionic polymers in the form of acrylates, starches or carboxymethylcelluloses.

12. Process according to one of Claims 9 to 11, characterized in that the masking or passivation agents are added in the form of a 0.1 to 10% strength aqueous solution to a leaching pulp stream distributed homogeneously over the cross-section.

**Revendications**

1. Procédé de lessivage d'or et/ou d'argent à partir de minerais ou de concentrés de minerai ainsi qu'à partir de déchets de métaux précieux ou de vieux métaux précieux dans une suspension de lessivage constituée du matériau cité à dissoudre et d'une solution de lessivage contenant du cyanure avec un pH de 7 à 13, en ajoutant une solution aqueuse de peroxyde d'hydrogène, procédé caractérisé en ce que :
   a) on ajoute au début du lessivage la quantité totale de solution de peroxyde d'hydrogène nécessaire au processus de lessivage dans la suspension de lessivage,
   b) on ajoute le peroxyde d'hydrogène en proportion 0,6 à 2,5 fois molaire par rapport à la concentration en cyanure de la suspension de lessivage et
   c) on ajuste le pH de la suspension de lessivage entre 7 et 10 ou 11 et 13 et on le maintient à cette valeur.

2. Procédé selon la revendication 1, caractérisé en ce qu on ajoute en continu et en dispersion homogène la solution de peroxyde d'hydrogène dans une suspension de lessivage en écoulement, sur toute la section du courant de suspension de lessivage.

3. Procédé selon la revendication 1 ou 2, caractérisé en ce qu'on ajoute la solution de peroxyde d'hydrogène avant l'addition de cyanure à la suspension de lessivage.

4. Procédé selon l'une des revendications précédentes, caractérisé en ce qu'on ajuste le pH de la suspension de lessivage entre 8 et 9,5 ou 11,5 et 12,3 et qu'on l'y maintient.

5. Procédé selon l'une des revendications précédentes, caractérisé en ce qu'on ajoute la solution de $H_2O_2$ en quantité telle que, par tonne de minerai, la quantité de $H_2O_2$ est de 0,1 à 2,5 kg pour des concentrations en cyanure de 0,1 à 3,0 kg NaCN/t de minerai.

6. Procédé selon l'une des revendications précédentes, caractérisé en ce qu'on incorpore la solution de $H_2O_2$ sous forme de courant transversal dans le courant de suspension de lessivage avec une vitesse d'écoulement qui est 10 à 50 fois celle du courant d'écoulement de la suspension de lessivage.

7. Procédé selon la revendication 6, caractérisé en ce que la suspension de lessivage est introduite avec une vitesse d'écoulement de 1 à 3 m/sec dans la zone d'addition de la solution de $H_2O_2$, et on règle l'écoulement transversal de la solution de $H_2o_2$ à une vitesse d'écoulement de 10 à 100 m/sec.

8. Procédé selon l'une des revendications 6 ou 7, caractérisé en ce qu'on réalise l'introduction de la solution de $H_2O_2$ dans le courant de suspension de lessivage par des buses à fentes dans le domaine des microns.

9. Procédé selon l'une des revendications précédentes, caractérisé en ce que lorsqu'on utilise des minerais ou des concentrés de minerais à teneurs élevées en fer et/ou cuivre solubles dans le cyanure, notamment sous forme de sulfures, on ajoute à la suspension de lessivage pour passiver ou masquer les minerais de cuivre ou de fer des réactifs de flottation pour minerais sulfurés, ou des polymères anioniques, à une concentration des réactifs qui atteint 5 à 1000 g/t de minerai, de préférence 25 à 250 g/t.

10. Procédé selon la revendication 9, caractérisé en ce qu'on réalise l'addition des réactifs de flottation ou des polymères après le réglage du pH de la suspension de lessive et avant l'addition de la solution de $H_2O_2$ et du cyanure.

11. Procédé selon la revendication 9 ou 10, caractérisé en ce qu'on ajoute à la suspension de lessivage comme agents de masquage ou de passivation des thiocarbonates, thiophosphates, thiocarbaminates ou des polymères anioniques sous forme d'acrylates, amidons, carboxyméthylcelluloses.

12. Procédé selon l'une des revendications 9 à 11, caractérisé en ce qu'on ajoute en répartition homogène à un courant de suspension de lessivage sur toute la section, les agents de masquage ou de passivation sous forme d'une solution aqueuse de 0,1 à 10 %.